# DEMANDE DE BREVET EUROPEEN

(11) **EP 2 978 105 A1**
(43) Date de publication de la demande: **27.01.2016**
(21) Numéro de dépôt: 14178009.8
(22) Date de dépôt: 22.07.2014
(51) Int. Cl.: H02K 3/28, H02K 3/52, H02K 37/14, H02K 37/18

(54) **Moteur électrique pas-à-pas**

(71) Demandeur: MMT AG, 6304 Zug (CH)
(72) Inventeur: Poinceau, Hubert, 2502 BIENNE (CH); Heredia, Alfonso, 25450 Damprichard (FR); Meyer, Yvan, 2054 Chézard-St-Martin (CH)
(74) Mandataire: reuteler & cie SA

(57) **Abrégé**

Moteur électrique pas-à-pas ayant au moins deux phases électriques, comprenant un stator (2) avec une pluralité de pôles magnétiques de stator (P) pour chaque phase électrique. Le stator comprend une armature magnétique (6) comprenant une pluralité de noyaux de bobines (14) et une pluralité de bobines (8, 9) pour chaque phase électrique montées sur les noyaux de bobines. Chaque bobine définit une desdites pôles magnétiques du stator. La pluralité de bobines de chaque phase électrique est formée d'au moins deux fils conducteurs (11, 21, 31, 41) connectés en parallèle. Une ou plusieurs bobines comprend l'un des fils conducteurs et une ou plusieurs autres bobines comprend l'autre desdits fils conducteurs.

## Description

La présente invention concerne le domaine des moteurs électriques pas-à-pas et notamment les moteurs électriques pas-à-pas hybrides pour des applications basse tension, par exemple pour des applications dans le domaine des véhicules.

Dans beaucoup d'applications on cherche à avoir des moteurs électriques de type pas-à-pas capable de fournir une puissance élevée, c'est-à-dire un couple élevé à vitesse élevée, pour un encombrement de moteur faible. De manière générale, le couple est fonction du courant ou des ampères tours (produit du courant par le nombre de spires d'une bobine) circulant dans les bobines d'une phase du moteur. Du fait de la rotation du moteur, chaque bobine crée une tension induite, proportionnelle à la vitesse, qui s'oppose à la tension d'alimentation, limitant ainsi le courant maximum dans les bobines.

Dans des applications où la tension d'alimentation est faible, par exemple pour des machines fonctionnant avec des batteries telles que dans les applications embarquées (e.g. véhicules, avions, bateaux), il faut pouvoir maintenir le courant à haute vitesse pour avoir plus de couple et plus de puissance mécanique. Toutefois, le courant ne peut pas s'établir ou se maintenir à haute vitesse du fait de la tension induite. Par ailleurs, l'application, par ses contraintes de tension maximale d'alimentation, ne permet pas de contrecarrer les effets de la tension induite en augmentant la tension d'alimentation.

Une solution conventionnelle pour améliorer la situation est de changer le bobinage à volume de cuivre théoriquement constant, notamment en utilisant du fil plus gros avec moins de spires. La tension induite est diminuée puisqu'elle est proportionnelle au nombre de spires. Les résistances et inductances sont proportionnelles au carré du nombre de spires et sont dont très fortement diminuées. Il s'ensuit que le courant peut être augmenté et maintenu jusqu'à des vitesses de rotation plus élevées. Cette solution rend le processus de fabrication, notamment le bobinage, plus difficile lorsque le diamètre de fil augmente. D'autre part, le design du stator peut limiter le diamètre du fil pouvant passer dans les espaces disponibles pour le bobinage. En effet, dans un moteur hybride traditionnel, les pôles sont évasés et la distance entre deux pôles ne permet pas d'augmenter beaucoup le diamètre de fil utilisé par le bobinage.

Une solution connue pour contourner cette dernière limitation est de fournir un stator articulé.

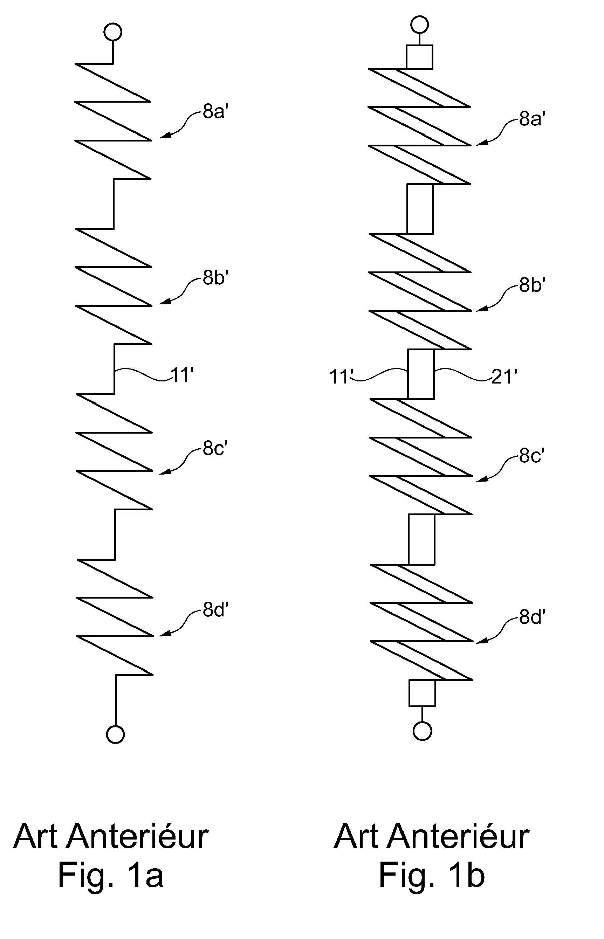

Faisant référence à la figure 1a, un bobinage conventionnel d'un moteur comprenant une pluralité de bobines par phase électrique est illustrée, les bobines 8a'-8d' étant connectées en série. Une solution connue pour améliorer le couple à haute vitesse, est de mettre des fils 11', 21' en parallèle (bobinage bi-filaire ou multifilaire), à savoir plusieurs séries de bobines 8a'-8d' sont réalisées pour une même phase, telle qu'illustrée schématiquement dans la figure 1b. Les fils sont ensuite connectés en parallèle, cela étant équivalent à augmenter le diamètre de fil. Pour les pôles d'une même phase, on peut mettre beaucoup de fils en parallèles, pour augmenter l'effet. Cela peut être difficile à gérer en termes de nombre de fils et de connexions électriques entre fils.

Un objet de l'invention est de fournir un moteur électrique pas-à-pas compact, performant et économique à fabriquer.

Il est avantageux de fournir un moteur électrique pas-à-pas ayant un grand couple à vitesse élevée.

Il est avantageux de fournir un moteur électrique pas-à-pas ayant un haut rendement.

Dans la présente invention, on décrit un moteur électrique pas-à-pas ayant au moins deux phases électriques, comprenant un stator avec une pluralité de pôles magnétiques de stator pour chaque phase électrique. Le stator comprend une armature magnétique comprenant une pluralité de noyaux de bobines et une pluralité de bobines pour chaque phase électrique montées sur les noyaux de bobines, chaque bobine définissant une desdites pôles magnétiques du stator. La pluralité de bobines de chaque phase électrique est formée d'au moins deux fils conducteurs connectés en parallèle. Une ou plusieurs de la pluralité de bobines de chaque phase électrique comprend un des au moins deux fils conducteurs et une ou plusieurs autres de la pluralité de bobines de chaque phase électrique comprend un autre des au moins deux fils conducteurs.

Dans une forme d'exécution, chaque bobine est unifilaire, à savoir qu'elle est formée d'un seul des fils conducteurs.

Dans une forme d'exécution, la pluralité de bobines de chaque phase électrique est formée de plus de deux fils conducteurs connectés en parallèle et chaque bobine est multifilaire, à savoir qu'elle est formée de plusieurs fils conducteurs. Le nombre de spires formées par un fil conducteur peut être différent, ou égal, au nombre de spires formées par un autre fil conducteur d'une même bobine multifilaire.

Dans une forme d'exécution, chaque bobine est connectée en parallèle avec les autres bobines de la même phase électrique.

Dans une forme d'exécution, la pluralité de bobines de chaque phase électrique comprend au moins deux groupes de bobines connectées en série.

Dans une forme d'exécution avantageuse, le moteur a deux phases électriques.

Dans une forme d'exécution avantageuse, le moteur comprend au moins huit pôles magnétiques répartis entre les phases électriques.

Dans une forme d'exécution avantageuse, le moteur comprend quatre bobines par phase électrique.

Dans une forme d'exécution avantageuse, le stator comprend des bornes électriques, chaque borne électrique comprenant une ou plusieurs partie(s) de connexion de fil configurée(s) pour une connexion avec une ou plusieurs extrémités des fils conducteurs et une partie de connexion de circuit configurée pour une connexion avec une plaquette de circuit.

Dans une forme d'exécution, chaque borne électrique comprenant une seule partie de connexion de fil configurée pour une connexion avec un seul des fils conducteurs.

Dans une forme d'exécution, chaque borne électrique comprend plusieurs parties de connexion de fil interconnectées à la partie de connexion de circuit par une partie de pont.

Dans une forme d'exécution avantageuse, le stator comprend un corps isolant monté sur l'armature magnétique, le corps isolant comprenant une partie de logement de noyau de bobine monté autour du noyau de bobine afin de protéger le fil conducteur d'un contact direct avec l'armature magnétique, le corps isolant comprenant en outre une partie de support de bornes électriques pour le montage de bornes électriques sur le corps isolant.

Dans une forme d'exécution avantageuse, l'armature magnétique comprend un corps de support, les pôles magnétiques s'étendant radialement vers l'intérieur du corps de support et comprenant une tête élargie, le noyau de bobine interconnectant la tête au corps de support, les têtes des pôles magnétiques adjacentes étant séparées entre elles par un espace permettant à un guide fil d'embobiner lesdits fils conducteur autour du noyau de bobine.

D'autres buts et aspects avantageux de l'invention apparaîtront à la lecture des revendications et/ou de la description détaillée ci-après de formes d'exécution de l'invention en relation avec les figures, dans lesquelles :
La Fig. 1a est un schéma d'un bobinage unifilaire d'une phase d'un moteur pas-à-pas connu ;
La Fig. 1b est un schéma d'un bobinage bifilaire d'une phase d'un moteur pas-à-pas connu;
La Fig. 2a est un schéma d'un bobinage unifilaire d'une phase d'un moteur électrique pas-à-pas selon une première variante d'une forme d'exécution de l'invention ;
La Fig. 2b est un schéma d'un bobinage unifilaire d'une phase d'un moteur électrique pas-à-pas selon une deuxième variante d'une forme d'exécution de l'invention ;
La Fig. 2c est un schéma d'un bobinage multifilaire d'une phase d'un moteur électrique pas-à-pas selon une troisième variante d'une forme d'exécution de l'invention ;
La Fig. 2d est un schéma d'un bobinage multifilaire d'une phase d'un moteur électrique pas-à-pas selon une quatrième variante d'une forme d'exécution de l'invention ;
La Fig. 3a est une vue d'une armature magnétique d'un stator d'un moteur électrique selon l'invention ;
La Fig. 3b est une vue en perspective de l'armature de la figure 3a ;
La Fig. 4 est une vue en perspective d'un stator d'un moteur électrique pas-à-pas selon une première forme d'exécution de l'invention ;
La Fig. 5 est une vue en perspective d'un stator d'un moteur électrique pas-à-pas selon une deuxième forme d'exécution de l'invention ;
La Fig. 6a est une vue en perspective d'un stator d'un moteur électrique pas-à-pas selon une troisième forme d'exécution de l'invention ;
La Fig. 6b est une vue plane du stator de la figure 6a et la Fig. 6c est une vue en coupe selon la ligne A-A de la figure 6b ;
La Fig. 7 est une vue en perspective d'un stator connecté à une plaquette de circuit d'un moteur électrique pas-à-pas selon une forme d'exécution de l'invention ; et
La Fig. 8 est une graphique montrant une relation entre la vitesse moteur et le couple / puissance pour un bobinage classique est des bobinages selon des formes d'exécution de l'invention.

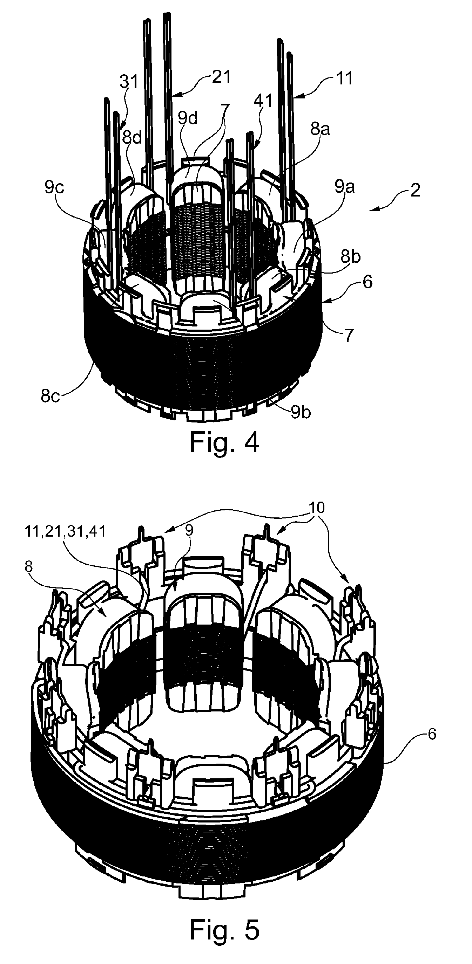

Faisant référence aux figures, un moteur électrique pas-à-pas, selon différentes formes d'exécution de l'invention comprend un rotor (non-illustré) et un stator 2 comprenant des bobinages 8 et une armature magnétique 6. Le rotor, connu en soi, comprend une partie aimantée définissant une pluralité de pôles de rotor, le rotor tournant autour d'un axe définissant une direction axiale. Les figures 4 à 7 illustrent un moteur à deux phases comprenant huit pôles magnétiques *P* au stator, chaque phase magnétique comprenant donc quatre pôles. L'invention peut toutefois être étendue à des moteurs comprenant trois ou plus de phases, chacune des phases comprenant deux ou plus de pôles, par exemple un moteur pas-à-pas comprenant trois phases et neuf pôles magnétiques. La pluralité de pôles de stator peut être de nombre égal ou différent du nombre de pôles du rotor.

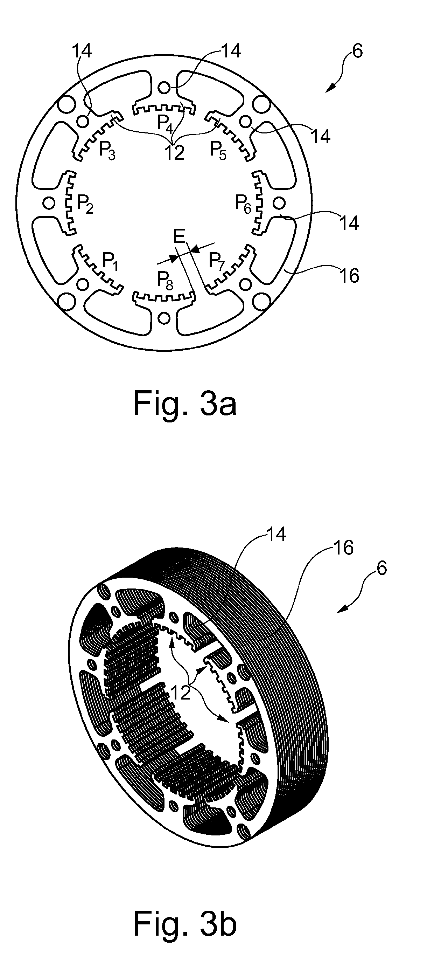

Faisant référence plus particulièrement aux figures 3a, 3b, l'armature magnétique 6 comprend un corps de support 16, par exemple sous forme d'un anneau, et une pluralité de pôles magnétiques *P* s'étendant radialement vers l'intérieur du corps de support. Les pôles magnétiques *P* comprennent une tête élargie 12 et un noyau de bobine 14 interconnectant la tête 12 au corps du support 16. Une bobine 8, 9 est embobinée autour du noyau de bobine 14. Dans l'exemple illustré, le moteur électrique comprend huit pôles magnétiques *P1* à *P8* pour un moteur diphasé, c'est-à-dire quatre pôles par phase. Les têtes 12 des pôles magnétiques P sont séparées entre elles par un espace *E*, l'espace *E* permettant à un guide fil d'embobiner un fil conducteur 11, 21, 31, 41 autour du noyau de bobine 14. La largeur de l'espace *E* limite donc l'épaisseur ou le diamètre du fil qui peut être utilisé pour la bobine.

La construction de l'armature magnétique 6 est en soi connue et peut être formée par un empilement de tôles en fer doux ou d'autres matériaux magnétiquement doux. Dans le cas de l'invention il est possible d'avoir différentes formes extérieures de l'armature magnétique, un nombre différent de pôles magnétiques, et un nombre différent de phases du moteur. La forme des têtes des pôles magnétiques ainsi que des noyaux de bobines peut également varier en fonction du diamètre du rotor, des matériaux utilisés et d'autres caractéristiques en soi connues dans la construction des moteurs pas-à-pas. Pour un moteur pas-à-pas utilisé dans des applications embarquées travaillant à basse tension (par exemple 12 volts, 24 volts ou 48 volts) la configuration illustrée comprenant un moteur diphasé avec huit pôles permet de fournir, en utilisant une configuration de bobinage selon l'invention, un moteur économique à fabriquer avec de bonnes performances couple/vitesse.

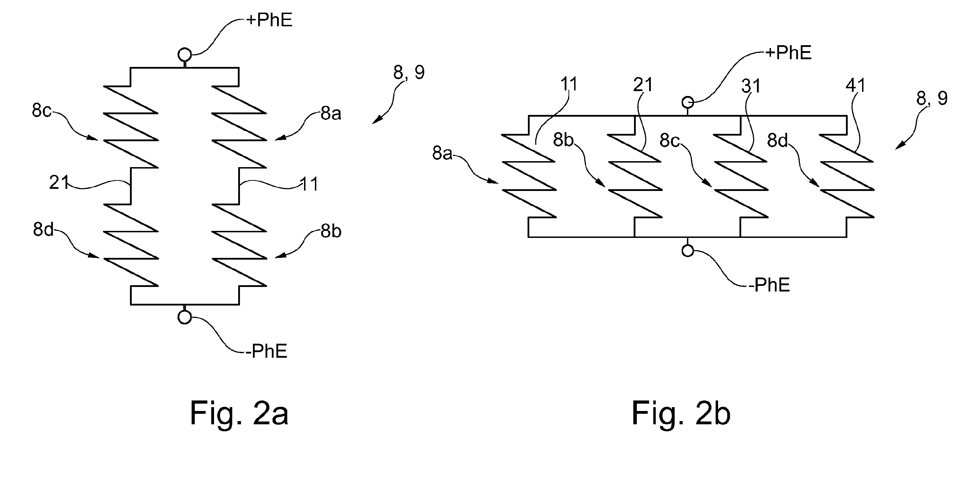

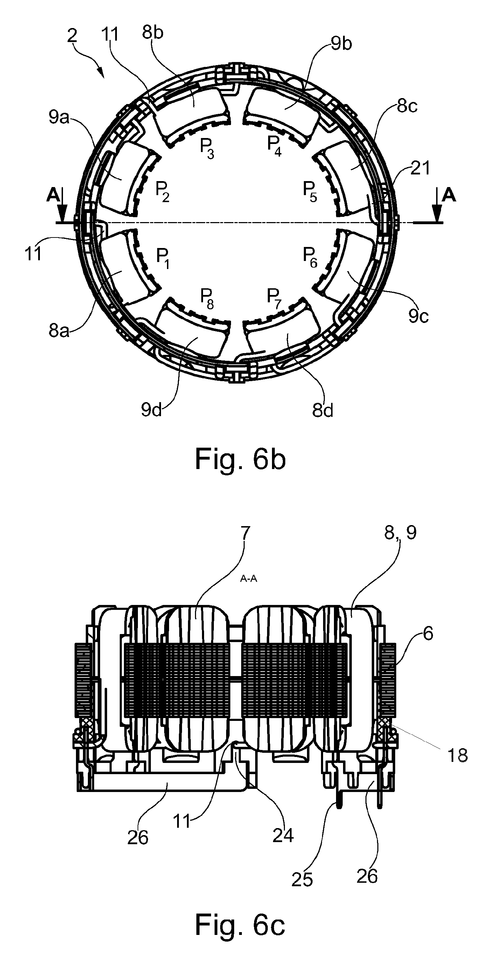

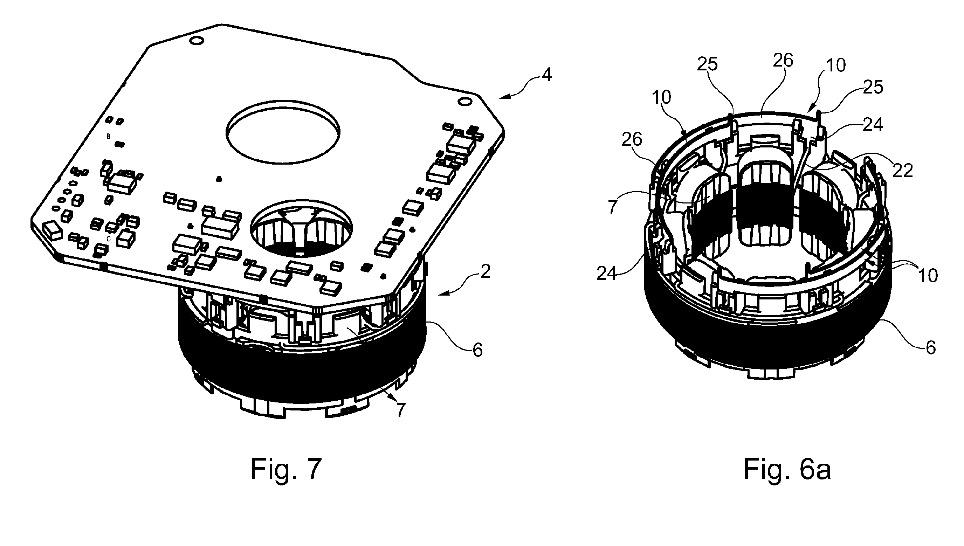

Le stator 2 comprend également un ou plusieurs corps isolant(s) 7 monté(s) sur l'armature magnétique 6, le corps isolant 7 comprenant une partie de logement de noyau de bobine monté autour du noyau de bobine 14 afin de protéger le fil 11, 21, 31, 41 d'un contact direct avec l'armature magnétique. Le corps isolant 7 peut par exemple être fait en deux parties assemblées de part et d'autre sur l'armature magnétique dans une direction axiale. Le corps isolant 7 peut aussi comprendre une autre partie de support de borne électrique 18 pour le montage de bornes électriques 10 (variante des figures 5 et 6) sur le corps isolant. Le corps isolant 7 peut comprendre d'autres aspects tels que des moyens de fixation pour l'assemblage de boîtiers ou d'autres composants du moteur autour ou sur le stator. Dans l'exemple illustré d'un moteur diphasé les bobines 8 d'une des phases sont disposées de manière interposée entre les bobines 9 de l'autre phase, les bobines 8 étant connectées entre elles pour former une des phases électriques, et les bobines 9 étant connectées entre elles pour former une autre phase du moteur électrique. Faisant référence aux figures 2a à 2d, en commençant par la figure 2a, l'interconnexion des bobines d'une des phases est illustrée. Le schéma de connexion de l'autre phase est identique. Les schémas de connexion et d'arrangement des bobines 8, 9 selon les différentes variantes des figures 2a à 2d peuvent être utilisés dans toutes les formes d'exécution illustrées dans les figures 4 à 7 et encore dans d'autres formes d'exécution non illustrées comprenant plus ou moins de pôles et/ou de phases électriques.

Dans la variante de connexion des bobines de la figure 2a, deux bobines 8a, 8b, respectivement 8c, 8d sont connectées en série, chaque paire de bobines étant formée par un fil 11, respectivement 21, connecté à ses extrémités à des conducteurs de la phase électrique *PhE* correspondante. La première paire de bobines 8a, 8b connectées en série est donc bobinée avec un fil 11 autour de deux noyaux de bobines 14, et l'autre paire de bobines 8c, 8d, connectées en série est formée d'un deuxième fil 21 autour de deux noyaux de bobines 14. Les fils 11, 21 des deux paires présentent chacun deux extrémités connectées à la même phase électrique *PhE* au moyen de connexions disposées sur la plaquette de circuit ou d'un autre moyen par ailleurs connu. Les extrémités des fils peuvent être connectées à des bornes électriques respectives se trouvant sur un connecteur externe, ou sur la plaquette de circuit 4. Dans une variante, les extrémités des fils des bobines, tels qu'illustrés dans la figure 4, peuvent être connectés directement à des pistes conductrices de la plaquette de circuit par soudure, brasage, ou par des connexions mécaniques, de type par exemple de sertissage ou d'enroulement autour d'un pin ou autre terminal monté sur la plaquette de circuit.

Dans la forme d'exécution de la figure 5, des bornes électriques 10 sont intégrées dans le stator 2, les bornes étant logées dans le corps isolant 7. Dans la configuration illustrée, il y autant de bornes électriques 10 que d'extrémités de fils utilisés pour le bobinage. Selon la réalisation des bornes électriques 10, plusieurs fils peuvent y être connectés. Cela peut être particulièrement utile, notamment dans le cas de bobinages bifilaires ou multifilaires. Dans l'exemple illustré, il y a huit pôles magnétiques *P1* à *P8* et huit bornes électriques 10, cela impliquant que le schéma de bobinage correspond à une variante selon la figure 2a comprend un fil 11, 21 bobiné autour de deux noyaux de bobines, les deux bobines étant connectées en série. Il y a donc, dans cet exemple spécifique, deux paires de bobines pour chaque phase.

La forme d'exécution illustrée à la figure 5 peut toutefois varier en fonction du nombre de fils utilisés pour le bobinage et le nombre de bobines connectées en série. Par exemple, si on se réfère à la configuration illustrée schématiquement dans la figure 2b, chaque bobine 8a, 8b, 8c, 8d d'une phase est formée par un fil conducteur 11, 21, 31, 41 différent. Une phase est donc formée par quatre bobines présentant huit extrémités et dans ce cas la variante de la figure 5 peut être modifiée en ce qu'il y aurait seize bornes électriques. Dans une variante, il est possible de réduire le nombre de bornes électriques en connectant une borne électrique à deux extrémités de fils conducteurs, voire même à trois ou à quatre extrémités de fils conducteurs, par exemple en fournissant une borne ayant un moyen de sertissage, ou en soudant les deux, voire plus d'extrémités ensemble.

Afin de diminuer le nombre de bornes électriques connectées à un connecteur externe ou à la plaquette de circuit 4, les bornes électriques 10 de même polarité et de même phase peuvent comprendre une partie de connexion de circuit 25 destinée à être connectée à la plaquette de circuit ou à un autre conducteur de la phase électrique et plusieurs parties de connexion de fils 24 connectées aux extrémités des fils des bobines au moyen d'une partie de pont 26 interconnectant la pluralité de partie de connexion de fils telle qu'illustrée dans les figures 6a à 6c. Dans cette dernière forme d'exécution, les bornes électriques sont par exemple formées par un estampage d'une tôle de métal. Les parties de connexion de fils 24 peuvent être sous forme de fentes présentant des lames prévues pour enlever l'isolation du fil et pincer le fil pour établir une connexion électrique entre le fil et les lames, ce type de contact électrique entre un fil isolé et une borne électrique étant en soi connu. Les parties de connexion du circuit 25 peuvent par exemple être sous forme de pins configurés pour être insérés dans des trous métallisés de la plaquette de circuit 4. Les parties de connexion de fils 24 et les parties de connexion de circuit 25 décrites en relation avec la variante de la figure 6a peuvent s'appliquer à la variante illustrée dans la figure 5.

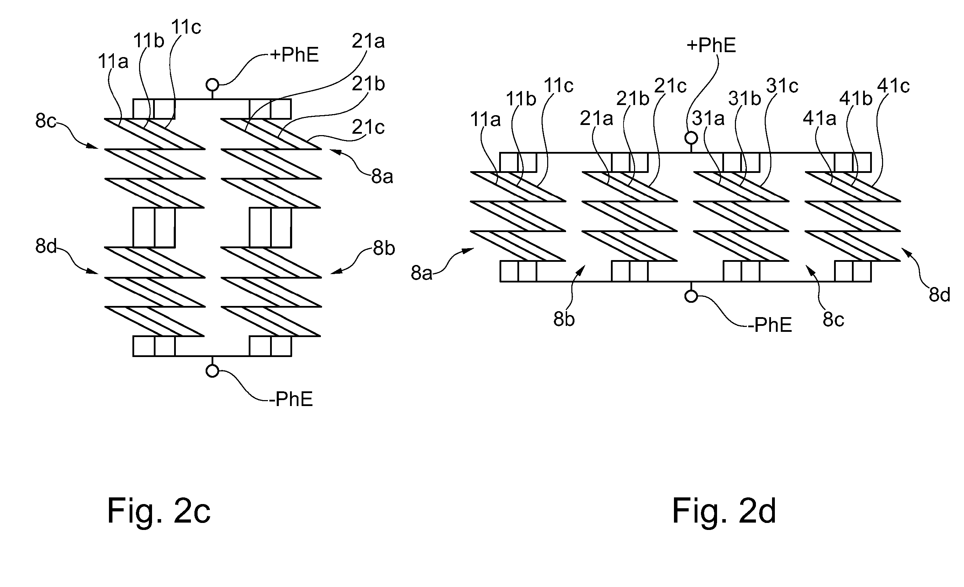

Faisant référence aux figures 2c et 2d, pour chaque bobine 8a, 8b, 8c, 8d (figure 2d) ou pour chaque paire de bobine connectée en série 8a, 8b, respectivement 8c, 8d (figure 2c), plusieurs fils sont embobinés autour de chaque noyau de bobine 14. Dans ces exemples, trois fils (a, b, c) sont embobinés autour de chaque noyau de bobine 14, mais il est bien entendu possible de n'avoir que deux fils dans le cas de ce bobinage multifilaire ou quatre fils, le nombre de trois fils illustré n'étant qu'à titre d'exemple d'un bobinage multifilaire. Les connexions des extrémités des fils peuvent être effectuées de différentes manières décrites en relation avec les configurations unifilaires illustrées dans les figures 2a et 2b ci-dessus.

Différents fils conducteurs d'une même bobine multifilaire peuvent former un nombre de spires différents ou égal. Aussi, le diamètre ou même les matériaux de différents fils conducteurs d'une même bobine peuvent être différents. Cela peut être avantageux en fonction de caractéristiques recherchées en relation avec le procédé de bobinage, les propriétés électriques, thermiques et mécaniques des fils conducteurs, et les coûts des matériaux et de production.

Dans une configuration ou deux bobines sont connectées en série, telle qu'illustrée dans la figure 2a, les deux bobines connectées en série peuvent être disposées de manière consécutive, c'est-à-dire séparées par un pôle d'une autre phase, ou de manière opposée. Par exemple, en faisant référence à la figure 3a, les positions *P1* et *P5* sont des positions opposées et les positions *P1* et *P7* sont des positions consécutives. Les positions *P1, P7, P5* et *P3* appartiennent à une phase et les positions *P2, P4, P6, P8* appartiennent à une deuxième phase.

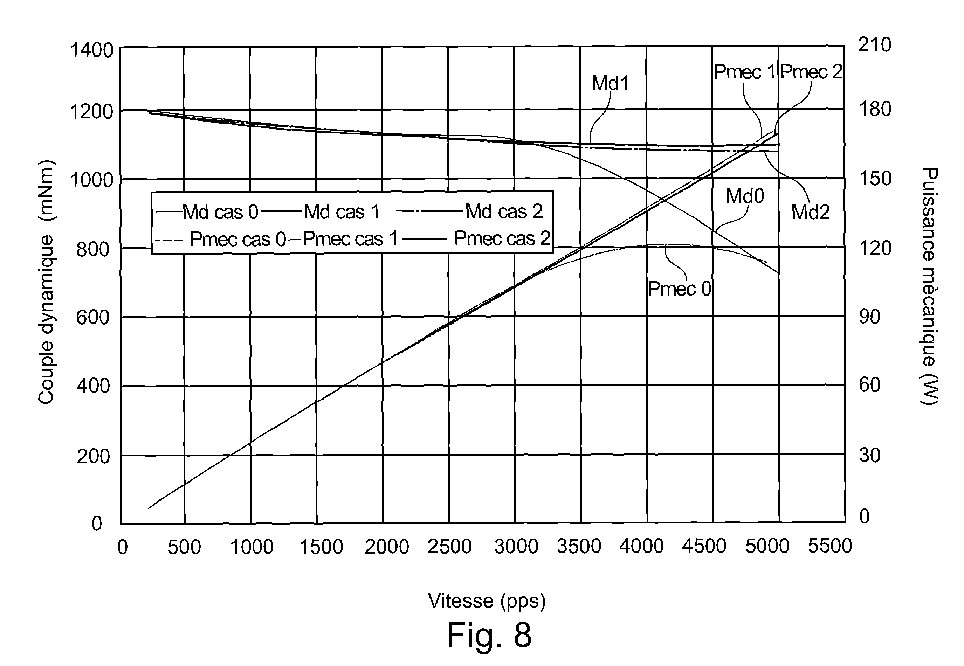

Faisant référence à la figure 8, une courbe de relation entre le couple dynamique, respectivement la puissance mécanique (axe vertical) et la vitesse de rotation du rotor (axe horizontal) pour trois différentes configurations de connexion de bobine est illustrée. La courbe *MD0* et *PMec0* représente une configuration selon l'état de l'art représenté par la figure 1a (quatre bobines d'une phase connectées en série) pour un moteur pas-à-pas ayant deux phases avec chacune quatre pôles. Les courbes de couple et de puissance *MD1, PMec1* et *MD2, PMec2,* correspondent à la configuration illustrée dans la figure 2a, à savoir pour *MD1, PMec1* une configuration de deux bobines consécutives connectées en série (par exemple P1 et P3 en série avec P5 et P7) et pour *MD2, PMec2* une configuration de deux bobines opposées connectées en série

(par exemple P1 et P5 en série avec P3 et P7). On constate qu'à des vitesses élevées le couple moteur des variantes selon l'invention est maintenu alors que pour une configuration selon l'art antérieur le couple diminue à haute vitesse.

### Liste des références dans les figures

### Moteur

Stator 2
Armature magnétique 6
   Pôle magnétique *P, P1 à P8*
   Tête 12
   Noyau de bobine 14
   Corps (anneau) de support 16
Corps isolant 7
   Partie de support de borne électrique 18
   Partie de logement de noyau de bobine
Bobinages 8, 9
   bobines 8a, 8b, 8c, 8d (phase une)
   bobines 9a, 9b, 9c, 9d (phase deux)
   Fil conducteur 11, 21, 31, 41 Borne électrique 10
   Partie de connexion de fil 24
   Partie de connexion de circuit 25
   Partie de pont 26
   Plaquette de circuit 4
   Direction axiale
   Espace entre pôles *E*

## Revendications

1. Moteur électrique pas-à-pas ayant au moins deux phases électriques, comprenant un stator (4) avec une pluralité de pôles magnétiques de stator (*P*) pour chaque phase électrique, le stator comprenant une armature magnétique (6) comprenant une pluralité de noyaux de bobines (14) et une pluralité de bobines (8, 9) pour chaque phase électrique montées sur les noyaux de bobines, chaque bobine définissant un desdits pôles magnétiques du stator, **caractérisé en ce que** ladite pluralité de bobines de chaque phase électrique est formée d'au moins deux fils conducteurs (11, 21, 31, 41) connectés en parallèle, et **en ce que** une ou plusieurs de ladite pluralité de bobines de chaque phase électrique comprend un desdits au moins deux fils conducteurs et une ou plusieurs autres de ladite pluralité de bobines de chaque phase électrique comprend un autre desdits au moins deux fils conducteurs.

2. Moteur électrique selon la revendication 1, **caractérisé en ce que** chaque bobine est unifilaire, étant formée d'un seul desdits au moins deux fils conducteurs.

3. Moteur électrique selon la revendication 1, **caractérisé en ce que** la pluralité de bobines de chaque phase électrique est formée de plus de deux fils conducteurs connectés en parallèle et chaque bobine est multifilaire, étant formée de plusieurs desdits fils conducteurs.

4. Moteur selon revendication précédente, **caractérisé en ce que** le nombre de spires formées par au moins un desdits fils conducteurs d'une bobine multifilaire est différent du nombre de spires formées par au moins un autre desdits fils conducteurs de ladite bobine multifilaire.

5. Moteur selon l'une quelconque des revendications précédentes, **caractérisé en ce que** chaque bobine est connectée en parallèle avec les autres bobines de la même phase électrique.

6. Moteur selon l'une quelconque des revendications 1 à 4, **caractérisé en ce que** ladite pluralité de bobines de chaque phase électrique comprend au moins deux groupes de bobines connectées en série.

7. Moteur selon l'une quelconque des revendications précédentes, **caractérisé en ce qu'**il a deux phases électriques.

8. Moteur selon l'une quelconque des revendications précédentes, **caractérisé en ce qu'**il comprend au moins huit pôles magnétiques (*P1-P8*) répartis entre les phases électriques.

9. Moteur selon l'une quelconque des revendications précédentes, **caractérisé en ce que** le moteur comprend quatre bobines par phase électrique.

10. Moteur selon l'une quelconque des revendications précédentes, **caractérisé en ce que** le stator comprend des bornes électriques (10), chaque borne électrique comprenant une ou plusieurs partie(s) de connexion de fil (24) configurée(s) pour une connexion avec une ou plusieurs extrémités des fils conducteurs et une partie de connexion de circuit (25) configurée pour une connexion avec une plaquette de circuit (4).

11. Moteur selon la revendication précédente, **caractérisé en ce que** chaque borne électrique comprenant une seule partie de connexion de fil configurée pour une connexion avec un seul des fils conducteurs.

12. Moteur selon la revendication 10, **caractérisé en ce que** chaque borne électrique comprend plusieurs parties de connexion de fil (24) interconnectés à la partie de connexion de circuit par une partie de pont (26).

13. Moteur selon l'une quelconque des revendications précédentes, **caractérisé en ce que** le stator comprend un corps isolant (7) monté sur l'armature magnétique, le corps isolant comprenant une partie de logement de noyau de bobine monté autour du noyau de bobine afin de protéger le fil conducteur d'un contact direct avec l'armature magnétique, le corps isolant comprenant en outre une partie de support de bornes électriques (18) pour le montage de bornes électriques (10) sur le corps isolant.

14. Moteur selon l'une quelconque des revendications précédentes, **caractérisé en ce que** l'armature magnétique comprend un corps de support (16), les pôles magnétiques (P) s'étendant radialement vers l'intérieur du corps de support et comprenant une tête (12) élargie, le noyau de bobine (14) interconnectant la tête au corps de support, les têtes des pôles magnétiques adjacentes étant séparées entre elles par un espace (*E*) permettant à un guide fil d'embobiner lesdits fils conducteur autour du noyau de bobine.
